(19) Europäisches Patentamt
European Patent Office
Office européen des brevets

(11) Veröffentlichungsnummer: **0 064 206**
**B1**

(12) **EUROPÄISCHE PATENTSCHRIFT**

(45) Veröffentlichungstag der Patentschrift: **29.05.85**

(51) Int. Cl.⁴: **C 01 C 3/00**

(21) Anmeldenummer: **82103258.8**

(22) Anmeldetag: **19.04.82**

(54) **Verfahren zur Herstellung von Chlorcyan aus Blausäure und Chlor.**

(30) Priorität: **29.04.81 DE 3117054**

(43) Veröffentlichungstag der Anmeldung: **10.11.82 Patentblatt 82/45**

(45) Bekanntmachung des Hinweises auf die Patenterteilung: **29.05.85 Patentblatt 85/22**

(84) Benannte Vertragsstaaten: **AT CH DE FR GB IT LI NL**

(56) Entgegenhaltungen:
**CH - A - 515 183**
**DE - A - 2 521 580**
**DE - A - 2 634 494**
**US - A - 3 197 273**
**US - A - 3 499 737**
**US - A - 3 723 065**
**US - A - 3 755 542**

(73) Patentinhaber: **BAYER AG, Konzernverwaltung RP Patentabteilung, D-5090 Leverkusen 1 Bayerwerk (DE)**

(72) Erfinder: **Königshofen, Heinrich, Dr., Am Mühlenberg 26, D-5060 Bergisch-Gladbach 2 (DE)**
Erfinder: **Brück, Dieter Wolfram, Dr., Elisabeth-Breuer-Strasse 10, D-5000 Köln 80 (DE)**
Erfinder: **Nierth, Alfred, Dr., Carl-Duisberg-Strasse 329, D-5090 Leverkusen 1 (DE)**
Erfinder: **Zlokarnik, Marko, Dr. Prof., Wolfskaul 5, D-5000 Köln 80 (DE)**
Erfinder: **Uhlmann, Hans-Jörg, Dr., Rungestrasse 53, D-5000 Köln 80 (DE)**

**EP 0 064 206 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die vorliegende Erfindung betrifft ein Verfahren zur kontinuierlichen Herstellung von Chlorcyan aus Cyanwasserstoff (Blausäure) und Chlor im wäßrigen Medium.

Chlorcyan ist ein bekanntes wertvolles Zwischenprodukt, z. B. für die Herstellung von Cyanurchlorid, das seinerseits ein Zwischenprodukt zur Herstellung von zahlreichen Produkten ist, beispielsweise von Pharmazeutika, Herbiziden, Farbstoffen, Aufhellern, synthetischen Harzen, Kunststoffen, Gummi, Sprengstoffen etc. (s. DE-A-1 667 778). Chlorcyan wird am häufigsten aus Blausäure und Chlor gemäß Gleichung (1) hergestellt:

$$HCN + Cl_2 \rightarrow ClCN + HCl \qquad (1)$$

Von den Möglichkeiten, die Reaktion in der Gasphase, in kondensierter Phase oder in einer Flüssigkeit als Reaktionsmedium durchzuführen, wird die Umsetzung in wäßrigem Medium bevorzugt (s. z. B. US-A-3 197 273). Die Verfahrensweise besteht dabei darin, daß man in eine mit Wasser berieselte Füllkörperkolonne etwa in der Mitte Blausäure entweder als Gas, als Flüssigkeit oder als wäßrige Lösung einleitet und gleichzeitig etwas tiefer Chlorgas zuführt. Von unten wird der Kolonne Dampf zugeführt. Die Reaktion läuft nach Gleichung (1) ab, und der entstehende Chlorwasserstoff löst sich in dem wäßrigen Medium zu Salzsäure. Durch die Wahl der richtigen Belastungen mit den verschiedenen Reaktionskomponenten, mit dem Wasser und dem Dampf kann die Temperatur in der Kolonne so gesteuert werden, daß am Kolonnenkopf Chlorcyan abgezogen werden kann. Nachteilig ist dabei, daß man am Kolonnensumpf eine sehr verdünnte, etwa 2- bis 3gew.-%ige wäßrige, Ammoniumchloridenthaltende Salzsäure erhält, die technisch nicht verwertbar ist. Darüber hinaus ergeben sich bei dieser Verfahrensweise noch weitere Nachteile, die darin bestehen, daß die Gaswäscher-, Reaktions- und Gasabtriebszone in der Füllkörperkolonne nicht exakt begrenzt werden können. So ist es unvermeidlich, daß im Gaswäscherteil neben der Blausäure auch größere Mengen des Reaktionsproduktes Chlorcyan absorbiert und in die Reaktions- oder Gasabtriebszone zurückgeführt werden. In diesen Bereichen der Kolonne entsteht durch die Rückführung ein Blausäure- und Chlorcyanpolster, das ständig der Hydrolyse durch die hier vorhandene Salzsäure unterliegt. Dies führt gemäß den Gleichungen (2) und (3) letzten Endes zur Bildung von Ammoniumchlorid und damit zur Ausbeuteminderung.

$$ClCN + 2\,H_2O \xrightarrow[HCl]{} CO_2 + NH_4Cl \qquad (2)$$

$$HCN + 2\,H_2O + HCl \longrightarrow HCOOH + NH_4Cl \qquad (3)$$

Außerdem enthält das am Kopf der Reaktionskolonne abgezogene Chlorcyan etwa 5% Chlor.

Eine Modifizierung dieser Verfahrensweise wird in US-A-3 499 737, DE-A-1 667 778 und DE-A-1 667 779 beschrieben. Der Unterschied zu dem oben beschriebenen Verfahren besteht darin, daß man Chlor im Überschuß über eine Glasfritte oder eine Gaseinleitungsvorrichtung mit einer Füllkörperpakkung einleitet und das in der Reaktionsmischung gelöste Chlorcyan nicht bei hoher Temperatur mit Wasserdampf, sondern mit gasförmigem Chlor bei Temperaturen bis zu 60°C austreibt. Mit dieser Verfahrensweise kann zwar eine konzentriertere wäßrige Salzsäure von bis zu etwa 20 Gew.-% gewonnen werden, das so gewonnene Chlorcyan enthält aber beträchtliche Mengen an Chlor und Blausäure. Der Blausäuregehalt rührt daher, daß diese von oben her dem Reaktionsgemisch zugeführt wird. Derartiges Chlorcyan kann nicht gelagert und nicht für Umsetzungen mit leicht chlorierbaren oder oxidierbaren Verbindungen verwendet werden.

Zur Überwindung dieser Probleme wird in der DE-A-2 521 580 die Durchführung der Reaktion von Blausäure mit Chlor in flüssigem wäßrigem Medium unter Anwendung von solchen Drucken beschrieben, bei denen das gesamte Chlor vollständig in Lösung vorliegt. Aus sicherheitstechnischen und ökologischen Gründen ist eine großtechnische Durchführung dieser Verfahrensweise jedoch nur schwierig zu realisieren, da man Leckagen nicht ausschließen kann und somit großer Aufwand für die Sicherheitstechnik und Ökologie notwendig wird.

Bisher gibt es demnach kein technisch durchführbares Verfahren zur Herstellung von Chlorcyan, das gleichzeitig sowohl hinsichtlich seiner Wirtschaftlichkeit, z. B. hinsichtlich hoher Raum/Zeit-Ausbeuten an Chlorcyan und verwertbaren Nebenprodukten, als auch hinsichtlich des Aufwandes für die Ökologie und Sicherheitstechnik befriedigend ist.

Es wurde nun ein Verfahren zur Herstellung von Chlorcyan aus flüssiger Blausäure und gasförmigem Chlor in einem wäßrigen Medium gefunden, das dadurch gekennzeichnet ist, daß man flüssige Blausäure und gasförmiges Chlor über eine oder mehrere Zweistoffdüsen in einen säulenförmigen Reaktor einbringt, und am Kopf des säulenförmigen Reaktors Reaktionsgemisch entnimmt, das man in an sich bekannter Weise auf gasförmiges Chlorcyan, wäßrige Salzsäure und ein rückführbares, Chlorcyan und gegebenenfalls Blausäure enthaltendes Waschwasser aufarbeitet.

In das erfindungsgemäße Verfahren einsetzbare flüssige Blausäure kann beispielsweise reine flüssige Blausäure oder eine beliebig konzentrierte wäßrige Lösung von Blausäure sein. Beispielsweise sind Blausäure bzw. wäßrige Blausäurelösungen mit einer Konzentration von 10 bis 100 Gew.-%

geeignet. Vorzugsweise wird reine flüssige Blausäure oder die handelsübliche etwa 20%ige Blausäure eingesetzt. In das erfindungsgemäße Verfahren einsetzbares gasförmiges Chlor kann beispielsweise handelsübliches Chlorgas oder durch Verdampfung von flüssigem Chlor erhaltenes Chlorgas sein.

Man kann das erfindungsgemäße Verfahren so durchführen, daß man Blausäure und Chlor im stöchiometrischen Verhältnis, d. h. in gleichen molaren Mengen, dem Reaktor zuführt. Da die Reaktion praktisch quantitativ abläuft ist es nicht erforderlich, eine der beiden Reaktionskomponenten im Überschuß einzusetzen, um das Reaktionsprodukt nahezu frei von einem der Ausgangsprodukte zu erhalten. Es kann aber auch so verfahren werden, daß einer der beiden Ausgangsstoffe im geringen Überschuß eingesetzt wird. Man kann dann die Konzentration dieser im Überschuß eingesetzten Komponenten im hergestellten Chlorcyan als Steuergröße für die Zudosierung der anderen Komponenten verwenden und ein Chlorcyan erhalten, das völlig frei von Blausäure oder Chlor ist. Wenn man mit einem geringen Überschuß einer Ausgangskomponente arbeiten will, setzt man bevorzugt Blausäure im geringen Überschuß ein.

Die Temperatur der eingesetzten Blausäure und des eingesetzten Chlors ist nicht von besonderer Bedeutung, wesentlich ist nur, daß die Blausäure flüssig und das Chlor gasförmig eingesetzt werden.

Es ist ein wesentliches Merkmal des erfindungsmäßen Verfahrens, daß man die Blausäure und das Chlor über eine oder mehrere Zweistoffdüsen dem Reaktor zuführt. Geeignete Arten von Zweistoffdüsen sind beispielsweise Injektordüsen, Ejektordüsen und Venturidüsen. Vorzugsweise werden Injektordüsen eingesetzt, besonders bevorzugt solche mit schlitzförmigem Austrittsquerschnitt, wie sie beispielsweise in der DE-A-2 634 494 beschrieben sind. Die Düsen können im allgemeinen an einer beliebigen Stelle des Reaktors angebracht sein. Beim Einsatz von Injektordüsen sind diese vorzugsweise am Boden des Reaktors angebracht.

Den Düsen wird als Gasphase das gasförmige Chlor und als Flüssigphase die Blausäure zugeführt. Wenn das Gas/Flüssigkeit-Verhältnis der Ausgangskomponenten keine optimale Betriebsweise der Zweistoffdüsen zuläßt, so kann ihnen weitere Flüssigkeit zugeführt werden, beispielsweise Reaktionsgemisch aus dem Reaktor und/oder Waschwasser aus der Aufarbeitung des Reaktionsgemisches.

Die Anzahl der Zweistoffdüsen richtet sich nach der Art der Düsen, dem gewünschten Gas- und Flüssigkeitsdurchsatz, der gewünschten Menge Chlorcyan und der gewünschten Konzentration der entstehenden Salzsäure. Es können im allgemeinen eine oder mehrere Zweistoffdüsen eingesetzt werden.

Die Zweistoffdüsen sind vorzugsweise am Boden des säulenförmigen Reaktors angebracht. Sie bewirken eine wesentliche Vergrößerung der Stoffaustauschfläche zwischen Flüssigkeit und Gas, da das Gas wesentlich feiner verteilt wird, als beim Einsatz von Fritten oder sonstigen für die Reaktion bisher gebräuchlichen Gaseinleitungsvorrichtungen. Damit sind im Reaktor höhere Chlorcyan- und Salzsäurekonzentrationen möglich, die bisher bewußt vermieden wurden, um die Hydrolysereaktionen (s. Gleichungen (2) und (3)) zu unterdrücken, die zur Bildung unerwünschter Nebenprodukte führen. Überraschenderweise treten solche Hydrolysereaktionen beim erfindungsgemäßen Verfahren in viel geringerem Umfang auf als bei den bisher bekannten Verfahren.

Der säulenförmige Reaktor ist vorzugsweise als Blasensäule ausgebildet. Der Reaktor ist vorzugsweise entlang der Höhe durch Siebböden in mehrere Stufen unterteilt, deren Anzahl von der gewünschten Einengung der Verweilzeit bestimmt wird.

Die Reaktionswärme kann auf beliebige Weise abgeführt werden, beispielsweise durch innenliegende oder außenliegende Kühler. Gemäß einer bevorzugten Ausführungsform des erfindungsgemäßen Verfahrens wird im unteren Bereich des Reaktors, vorzugsweise am Boden des Reaktors, Reaktionsgemisch entnommen, über einen Kühler geführt, der beispielsweise mit Kühlwasser betrieben wird, und weiter oben wieder in den Reaktor einspeist. Diese Einspeisung erfolgt vorzugsweise so, daß oberhalb der Einspeisestelle im Reaktor ein Produktstrom entsteht, der dem gewünschten Durchsatz entspricht. Wenn als Reaktor eine Blasensäule mit Siebböden verwendet wird, so liegt die Einspeisestelle für das gekühlte Reaktionsgemisch beispielsweise unterhalb des obersten, vorzugsweise unterhalb des untersten Siebbodens. Durch diese Maßnahmen wird die Abführung der Reaktionswärme und die Abbremsung der durch die Zweistoffdüsen hervorgerufenen Aufwärtsströmung von Flüssigkeit und Gasblasen bewirkt, wenn die Düsen am Boden des Reaktors angebracht sind.

Falls es für einen optimalen Betrieb der Zweistoffdüsen wünschenswert ist, diesen mehr Flüssigkeit zuzuführen als es der einzusetzenden flüssigen Blausäure entspricht, kann zwischen dem Kühler und der Einspeisestelle in den Reaktor ein Teil des umgewälzten Reaktionsgemisches abgezogen und zusätzlich zu der flüssigen Blausäure den Zweistoffdüsen als flüssige Phase zugeführt werden.

Im Reaktor wird die Temperatur vorzugsweise so eingestellt, daß das gebildete Chlorcyan im oberen Teil des Reaktors teilweise aus der flüssigen Phase entgast. Geeignete Temperaturen sind beispielsweise 15 bis 60° C. Vorzugsweise betreibt man den Reaktor mit 30 bis 40° C.

Das erfindungsgemäße Verfahren kann beispielsweise drucklos oder bei leicht erhöhtem Druck, der im wesentlichen von den nachfolgenden Apparaturen bestimmt wird, durchgeführt werden. Der Druck am Kopf des Reaktors kann beispielsweise im Bereich von 1 bis 2,5 bar absolut liegen. Vorzugsweise liegt der Druck am Kopf des Reaktors im Bereich 1 bis 1,5 bar absolut, besonders bevorzugt im Bereich 1 bis 1,45 bar absolut. Im Prinzip können auch höhere Drucke angewendet werden, dies ist aber aus ökologischen und sicherheitstechnischen Gründen nicht vorteilhaft. Im Gegensatz zu den in der DE-A-2 521 580 als nachteilig beschriebenen Fahrweise bei niedrigen Drucken, beispielsweise bei 1,3 bar absolut Staudruck, wird beim erfindungsgemäßen Verfahren auch bei praktisch druckloser Fahrweise, beispielsweise bei 1,1 bar absolut Staudruck, ein nahezu 100%iger Umsatz erreicht.

Das am Kopf des Reaktors austretende Gas/Flüssigkeits-Gemisch wird in an sich bekannter Weise auf gasförmiges Chlorcyan, wäßrige Salzsäure und ein rückführbares Waschwasser aufgearbeitet. Beispielsweise ist hierfür eine Wäscher-Stripper-Kombination geeignet.

Es ist ausgesprochen überraschend, daß es mit dem erfindungsgemäßen Verfahren gelingt, bei niedrigen Drucken in gasförmig-flüssiger Phase praktisch 100%ige Umsätze zu erreichen. Aufgrund der DE-A-2 521 580 war zu erwarten, daß bei niedrigen Drucken nur unvollständige Umsätze realisiert werden können, wenn man in gasförmig-flüssiger Phase arbeitet.

Gegenüber den bisher bekannten Verfahren in gasförmig-flüssiger Phase, z. B. gemäß der DE-A-1 667 779, liegen die Vorteile des erfindungsgemäßen Verfahrens darin, daß neben einem Chlor-freien Chlorcyan auch eine konzentriertere Salzsäure, beispielsweise eine 10- bis 15%ige Salzsäure, gewonnen werden kann, die praktisch frei von Ammoniumchlorid ist.

Darüber hinaus ist die erfindungsgemäße Arbeitsweise, bei der drucklos oder bei nur geringfügig erhöhtem Druck gearbeitet werden kann, aus wirtschaftlichen und ökologischen Gründen vorteilhaft gegenüber dem Stand der Technik.

Eine besonders bevorzugte Ausführungsform des erfindungsgemäßen Verfahrens wird im folgenden anhand der Abbildung 1 erläutert.

Blausäure, vorzugsweise in hochkonzentrierter wäßriger Lösung oder als reine flüssige Blausäure, wird über die Leitungen 1, 2 und 3 der Blasensäule A über die Zweistoffdüsen D zugeführt. Gasförmiges Chlor wird über Leitung 4 ebenfalls der Blasensäule A über die Zweistoffdüsen D zugeführt. Über die Leitung 5 wird der Blasensäule A ein Teil des Reaktionsgemisches am Boden entnommen und durch den mit Kühlwasser gekühlten Kühler E geführt, in dem die Reaktionswärme entzogen wird. Der den Kühler E verlassende Strom 6 wird aufgeteilt in Strom 7 und Strom 8. Strom 8 wird über Leitung 3 den Zweistoffdüsen D zugeführt und so einreguliert, daß das Gas/Flüssigkeits-Verhältnis (Strom 4 zu Strom 3) in den Zweistoffdüsen optimal ist. Der nicht zu den Zweistoffdüsen zurückgeführte Teil des den Kühler E verlassenden Stromes 6 wird über Leitung 7 in den mittleren Bereich der Blasensäule A geführt. Am Kopf der Blasensäule A wird über Leitung 9 Reaktionsgemisch entnommen. Der Strom enthält Chlorcyan (zum größen Teil gasförmig), wäßrige Salzsäure und geringe Mengen Blausäure und wird in den Stripper B geführt, der vorzugsweise mit einem Spritzschutz (B') versehen ist. Der Stripper B ist unten mit einem Verdampfer versehen, der so beheizt wird, daß im Strom 9 noch in gelöster Form vorhandenes Chlorcyan verdampft und die über Leitung 10 abfließende Salzsäure frei von Chlorcyan und Blausäure ist. Das salzsäurefreie, gasförmige Chlorcyan, das noch geringe Mengen Blausäure enthalten kann, wird dem Stripper B über Leitung 11 entnommen und dem Wäscher C zugeführt, der über Leitung 12 mit Waschwasser beschickt wird. Über Leitung 14 wird Chlorcyan und Blausäure enthaltendes Waschwasser entnommen, das über die Leitungen 2 und 3 den Zweistoffdüsen D zugeführt wird. Praktisch reines gasförmiges Chlorcyan wird dem Wäscher über Leitung 13 entnommen.

## Beispiele

Bei den Beispielen wurde entsprechend der zuvor beschriebenen besonders bevorzugten Ausführungsform des erfindungsgemäßen Verfahrens verfahren. Die Bezugszahlen und -buchstaben beziehen sich auf die Abbildung 1.

### Beispiel 1

Der aus einer Blasensäule bestehende Reaktor A war durch 2 Siebböden in 3 Kammern unterteilt und mit einer Injektordüse entsprechend der DE-A-2 634 494 ausgerüstet. Das Reaktorvolumen betrug $^1/_3$ des stündlichen Durchsatzes. Vor Beginn der Reaktion wurde der Reaktor mit Wasser gefüllt. Anschließend wurde je Stunde über Leitung 1 38 kg reine flüssige Blausäure und über Leitung 4 100 kg gasförmiges Chlor zugeführt. Nach Erreichen konstanter Betriebsbedingungen wurden folgende Reaktorkenndaten ermittelt:

| | |
|---|---|
| Druck am Reaktorkopf: | 1,25 bar (absolut) |
| Temperatur in der untersten Kammer: | 36°C |
| Temperatur in den Strömen 6, 7, 8: | 18°C |
| Temperatur am Reaktorausgang: | 26°C |
| Umwälzung durch Strom 5: | 21faches Reaktorvolumen |
| Umwälzung durch Strom 8: | 9faches Reaktorvolumen |

Das aus dem Reaktor A austretende Reaktionsgemisch (Strom 9) wurde in eine Entgasungskolonne B geleitet, die über einen Verdampfer auf einer Temperatur von 30 bis 40°C an der Einleitungsstelle gehalten wurde. Die Sumpftemperatur betrug 101°C.

Am Sumpf der Entgasungskolonne B wurde als Strom 10 806 kg/h wäßrige, 6,36gew-%ige Salzsäure abgezogen, die 31 ppm $NH_3$ und ca. 1 ppm HCN enthielt. Das gasförmige Chlorcyan wurde über Leitung 11 in einen Wäscher geleitet, der durch Leitung 12 mit 755 kg/h Wasser beschickt wurde. Aus dem Wäscher C wurden 85 kg/h Chlorcyan mit einem Gehalt an Blausäure von 0,01 Gew.-% und einem Gehalt an Chlor von 0,06 Gew.-% durch Leitung 13 abgezogen. Das Waschwasser aus dem Wäscher D wurde über die Leitungen 14, 2 und 3 in den Reaktor A zurückgeführt.

### Beispiel 2

Es wurde verfahren wie in Beispiel 1, jedoch wurden über Leitung 1 193 kg/h wäßrige Blausäure entsprechend 38 kg reiner Blausäure und über Leitung 12 600 kg/h Waschwasser zugeführt. Die Reaktorkenndaten waren wie in Beispiel 1 angegeben. Über Leitung 10 wurden 800 kg/h wäßrige, 6,3gew.-%ige Salzsäure erhalten, die 45 ppm $NH_3$ und ca. 1 ppm HCN enthielt. Die Ausbeute an Chlorcyan betrug 85 kg/h (Leitung 13). Das Chlorcyan enthielt 0,02 Gew.-% Blausäure und 0,05 Gew.-% Chlor.

### Beispiel 3

In die gleiche Apparatur wie bei Beispiel 1 wurden über Leitung 1 57 kg/h reine Blausäure, über Leitung 4 150 kg/h gasförmiges Chlor und über Leitung 12 940 kg/h Waschwasser zugeführt.

Nach Erreichen konstanter Betriebsbedingungen stellte sich am Reaktorkopf ein Druck von 1,4 bar (absolut) ein. Die Temperatur in der untersten Kammer des Reaktors war 35° C, die sonstigen Reaktorkenndaten wie im Beispiel 1 angegeben.

Über Leitung 10 wurden 1017 kg/h wäßrige, 7,6gew.-%ige Salzsäure abgezogen, die 41 ppm $NH_3$ und weniger als 1 ppm Blausäure enthielt. Die Ausbeute an Chlorcyan betrug 129,6 kg/h (Strom 13). Das Chlorcyan enthielt 0,07 Gew.-% Chlor und 0,09 Gew.-% HCN.

### Beispiel 4

Es wurde verfahren wie in Beispiel 3, jedoch wurden nur 470 kg/h Waschwasser über Leitung 12 zugegeben. Nach Erreichen konstanter Betriebsbedingungen betrug der Druck am Reaktorkopf 1,1 bar (absolut), die Temperatur in der untersten Kammer des Reaktors 32° C und die Temperatur am Reaktorausgang 28° C. Die sonstigen Reaktorkenndaten waren wie im Beispiel 1 angegeben.

Über Leitung 10 wurden 547 kg/h wäßrige, 14,0gew.-%ige Salzsäure abgezogen, die 85 ppm $NH_3$ und weniger als 1 ppm Blausäure enthielt. Die Ausbeute an Chlorcyan betrug 129,5 kg/h (Strom 13). Das Chlorcyan enthielt 0,05 Gew.-% Chlor und 0,1 Gew.-% Blausäure.

## Patentansprüche

1. Verfahren zur Herstellung von Chlorcyan aus flüssiger Blausäure und gasförmigem Chlor in einem wäßrigen Medium, dadurch gekennzeichnet, daß man flüssige Blausäure und gasförmiges Chlor über eine oder mehrere Zweistoffdüsen in einen säulenförmigen Reaktor einbringt, und am Kopf des säulenförmigen Reaktors Reaktionsgemisch entnimmt, das man in an sich bekannter Weise auf gasförmiges Chlorcyan, wäßrige Salzsäure und ein rückführbares, Chlorcyan und gegebenenfalls Blausäure enthaltendes Waschwasser aufarbeitet.

2. Verfahren nach Anspruch 1, dadurch gekennzeichnet, daß man als Zweistoffdüse(n) solche mit schlitzförmigen Austrittsquerschnitt einsetzt und diese am Boden des Reaktors anbringt.

3. Verfahren nach Anspruch 1 und 2, dadurch gekennzeichnet, daß man im unteren Bereich des Reaktors Reaktionsgemisch entnimmt, über einen Kühler führt und weiter oben wieder in den Reaktor einspeist.

4. Verfahren nach Anspruch 3, dadurch gekennzeichnet, daß man zwischen dem Kühler und der Einspeisestelle in den Reaktor ein Teil des umgewälzten Reaktionsgemisches abzieht und zusätzlich zu der Blausäure den Zweistoffdüsen als flüssige Phase zuführt.

5. Verfahren nach Anspruch 1 bis 4, dadurch gekennzeichnet, daß die Temperatur der eingesetzten Blausäure und des eingesetzten Chlors so gewählt wird, daß die Blausäure flüssig und das Chlor gasförmig eingesetzt werden.

6. Verfahren nach Anspruch 1 bis 5, dadurch gekennzeichnet, daß der Druck am Kopf des Reaktors im Bereich 1 bis 2,5 bar absolut liegt.

7. Verfahren nach Anspruch 1 bis 6, dadurch gekennzeichnet, daß die Temperatur im Reaktor 15 bis 60° C beträgt.

8. Verfahren nach Anspruch 1 bis 7, dadurch gekennzeichnet, daß der Reaktor als Blasensäule ausgebildet ist und Siebböden enthält.

**Claims**

1. Process for the production of cyanogen chloride from liquid hydrocyanic acid and gaseous chlorine in an aqueous medium, characterised in that liquid hydrocyanic acid and gaseous chlorine are fed into a column-shaped reactor via one or more two-component nozzles and reaction mixture is removed at the head of the column-shaped reactor, and is worked up in a manner which is in itself known, to give gaseous cyanogen chloride, aqueous hydrochloric acid and a wash water which can be recycled and contains cyanogen chloride and possibly hydrocyanic aced.

2. Process according to Claim 1, characterised in that the two-component nozzle(s) used and located at the bottom of the reactor are those having a slot-shaped exit cross-section.

3. Process according to Claim 1 and 2, characterised in that reaction mixture is removed in the lower part of the reactor, passed through a cooler and returned to the reactor by feeding in higher up.

4. Process according to Claim 3, characterised in that part of the circulating reaction mixture is removed between the cooler and the feeding-in point into the reactor and passed to the two-component nozzles as a liquid phase in addition to the hydrocyanic acid.

5. Process according to Claim 1 to 4, characterised in that the temperature of the hydrocyanic acid used and of the chlorine used is so chosen that the hydrocyanic acid is used in a liquid form and the chlorine in a gaseous form.

6. Process according to Claim 1 to 5, characterised in that the pressure at the head of the reactor is in the range from 1 to 2.5 bars absolute.

7. Process according to Claim 1 to 6, characterised in that the temperature in the reactor is 15 to 60°C.

8. Process according to Claim 1 to 7, characterised in that the reactor is in the form of a bubble column and contains sieve plates.

**Revendications**

1. Procédé pour la fabrication de chlorure de cyanogène à partir d'acide cyanhydrique liquide et de chlore gazeux dans un milieu aqueux, caractérisé en ce que l'on introduit dans un réacteur en forme de colonne de l'acide cyanhydrique liquide et du chlore gazeux par une ou plusieurs buses à deux substances et on retire en tête du réacteur en forme de colonne un mélange de réaction que l'on traite de manière connue pour obtenir du chlorure de cyanogène gazeux de l'acide chlorhydrique aqueux et une eau de lavage recyclable contenant du chlorure de cyanogène, et éventuellement de l'acide cyanhydrique.

2. Procédé selon la revendication 1, caractérisé en ce que l'on utilise comme buse(s) à deux substances une ou des buses à section de sortie en forme de fente et on les dispose dans le fond du réacteur.

3. Procédé selon les revendications 1 et 2, caractérisé en ce que l'on retire dans la partie inférieure du réacteur du mélange de réaction, on l'envoie à travers un réfrigérant et on l'introduit à nouveau plus haut dans le réacteur.

4. Procédé selon la revendication 3, caractérisé en ce que l'on retire une partie du mélange de réaction recyclé entre le réfrigérant et le point d'introduction dans le réacteur et on l'envoie comme phase liquide aux buses à deux substances en plus de l'acide cyanhydrique.

5. Procédé selon les revendications 1 à 4, caractérisé en ce que la température de l'acide cyanhydrique utilisé et du chlore utilisé est choisie de telle sorte que l'acide cyanhydrique soit utilisé à l'état liquide et le chlore sous forme gazeuse.

6. Procédé selon les revendications 1 à 5, caractérisé en ce que la pression en tête du réacteur est comprise dans l'intervalle de 1 à 2,5 bars absolus.

7. Procédé selon les revendications 1 à 6, caractérisé en ce que la température dans le réacteur est de 15 à 60°C.

8. Procédé selon les revendications 1 à 7, caractérisé en ce que le réacteur a une structure de colonne à bulles et contient des plateaux perforés.

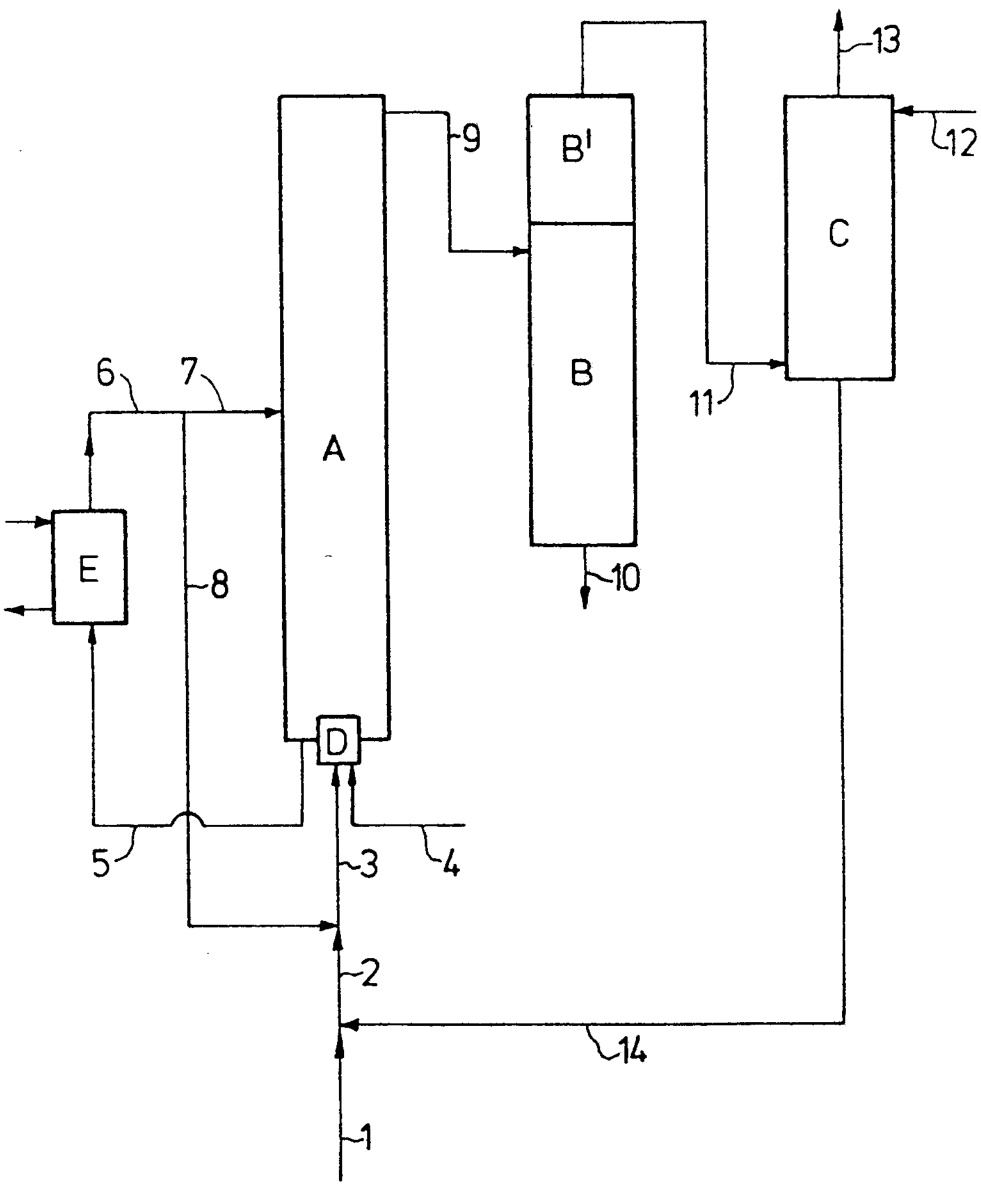
13
12
9
B'
C
A
B
6
7
11
E
8
10
D
5
3
4
2
14
1